# FASCICULE DE BREVET EUROPEEN

(11) **EP 0 656 252 B1**
(45) Date de publication et mention de la délivrance du brevet: **05.04.2000**
(21) Numéro de dépôt: 94402614.5
(22) Date de dépôt: 17.11.1994
(51) Int. Cl.: B32B 3/24, B32B 15/08

(54) **Procédé de fabrication d'un matériau de revêtement en feuille, renforcé, à faible coefficient de frottement**
Verfahren zur Herstellung einer mit verstärktem Film beschichtetem Materials mit kleinem Reibungskoeffizienten
Process for manufacturing a material, laminated with a reinforced film, having a low coefficient of friction

(30) Priorité: 18.11.1993 FR 9313793
(43) Date de publication de la demande: 07.06.1995
(73) Titulaire: COMPAGNIE PLASTIC OMNIUM, 69007 Lyon (FR)
(72) Inventeur: Bartocci, Marcel, F-52200 Langes (FR)
(74) Mandataire: Leszczynski, André

(56) Documents cités:
- EP-A- 0 040 448
- DE-A- 3 304 141
- DE-A- 3 922 052
- FR-A- 2 445 210
- US-A- 3 607 594

## Description

La présente invention concerne un procédé de fabrication d'un matériau de revêtement en feuille, à renfort métallique, présentant un faible coefficient de frottement, et un matériau obtenu selon ce procédé.

On connaît déjà des matériaux de revêtement en feuilles, qui sont composés d'un tissu métallique revêtu d'un polymère fluoré.

De tels matériaux sont par exemple utilisés pour réaliser des bagues de rotation des coussinets ou des paliers, notamment pour équiper les charnières des portières de véhicules automobiles, et pour guider des arbres coulissants.

Ainsi renforcé, le matériau fluoré présente une meilleure stabilité dimensionnelle, principalement du fait que le renfort métallique limite considérablement le fluage du polymère fluoré.

Cependant, ces matériaux en feuilles présentent habituellement l'inconvénient important que lors d'un découpage, les brins métalliques situés sur le bord de coupe de la feuille ont tendance à s'effilocher, ce qui fragilise la bordure de la feuille.

De plus, dans certaines conditions d'utilisation, il se produit un fluage du polymère fluoré malgré la présence du renfort métallique.

On connait, du document FR-A-2 445 210, un procédé de fabrication d'un matériau en feuille comprenant une structure métallique en treillis, notamment en métal déployé, revêtue sur chaque face d'une bande de polytétrafluoroéthylène.

Ce procédé prévoit de presser à chaud dans un moule l'assemblage ainsi réalisé, pour atteindre une pression comprise entre 20 et 200 kg/cm².

De telles pressions se sont cependant révélées insuffisantes pour obtenir un matériau fiable et résistant.

En outre, selon ce procédé, le temps de séjour de l'assemblage dans le moule chauffé est de l'ordre de 2 heures, ce qui n'est pas adapté à une fabrication en continu du matériau, d'autant plus qu'il est prévu dans le document antérieur d'effectuer un refroidissement sous pression du matériau à la sortie du moule.

La présente invention vise à permettre de réaliser un matériau de revêtement en feuille, à faible coefficient de frottement, qui ne présente notamment pas les inconvénients mentionnés précédemment.

La présente invention a pour objet un procédé de fabrication d'un matériau en feuille présentant un faible coefficient de frottement , à partir d'un empilement d'une nappe de métal déployé et d'au moins un ruban de polytétrafluoroéthylène (PTFE), par compression et chauffage, caractérisé par le fait que l'on procède d'abord à un calandrage de l'empilement, puis à un chauffage de l'empilement calandré pour réaliser le frittage du PTFE.

Selon l'invention, on entend par nappe de métal déployé une nappe métallique obtenue par découpage de lanières dans une feuille métallique et étirage de ces lanières dans une direction oblique par rapport au plan de la feuille métallique.

Le matériau de revêtement en feuille obtenu par mise en oeuvre du procédé selon l'invention peut être découpé, sans qu'il soit nécessaire d'en réaliser le bordage, le bord de coupe de la feuille présentant une résistance et une homogénéité sensiblement identiques à celles du reste de la feuille.

En outre, le matériau en feuille selon l'invention présente une homogénéité structurelle optimale, ce qui permet de le plier ou de l'emboutir sans difficulté.

En effet, la compression obtenue par calandrage de l'empilement, qui permet d'atteindre des pressions élevées de préférence de l'ordre de 500 kg/cm², provoque la pénétration du polytétraf luoroéthylène (PTFE) entre les lanières du métal déployé, puis l'écrasement partiel des lanières du métal déployé, lesquelles se rapprochent les unes des autres en emprisonnant entre elles le PTFE.

On obtient ainsi un accrochage mécanique du PTFE sur le métal déployé, accrochage mécanique qui vient s'ajouter aux liaisons obtenues par le frittage ultérieur du PTFE.

Le procédé selon l'invention présente l'avantage de permettre une fabrication continue de matériau en feuille, en utilisant une bande de métal déployé et au moins un ruban de PTFE, lesquels sont empilés et entraînés pour passer successivement au travers d'un ensemble de rouleaux de calandrages et d'un four, après quoi on laisse refroidir le matériau formé.

Lors du calandrage de l'empilement, ce dernier peut s'allonger de 10 à 25 %.

Dans un mode de mise en oeuvre préféré, on dispose deux rubans de PTFE de part et d'autre de la nappe de métal déployé.

Le PTFE peut être naturel ou chargé, notamment de pigments colorés.

De préférence, on utilise du PTFE cru. En cas d'utilisation de PTFE cuit, il est nécessaire, après avoir calandré à froid la feuille de revêtement, de réaliser le frittage du PTFE par chauffage et compression simultanés.

Avantageusement, on utilise du PTFE fibré, obtenu par extrusion lubrifiée. Ce type d'extrusion consiste à comprimer un mélange de poudre de PTFE et d'environ 20% de lubrifiant pour l'extruder sous forme de ruban, ce qui conduit à la production de fibres ou de fibrilles, orientées dans le sens de l'écoulement de la matière.

Le métal déployé utilisable selon l'invention peut être de l'acier doux, de l'acier inoxydable, un acier revêtu ou des alliages de cuivre, de laiton, de bronze, de nickel, de zinc ou de métaux précieux.

La présente invention a également pour objet un matériau en feuille obtenu par mise en oeuvre du procédé décrit ci-dessus.

Dans le but de mieux faire comprendre l'invention, on va en décrire maintenant un exemple de réalisation en référence au dessin annexé dans lequel :
- la figure 1 est une vue en coupe d'un matériau en feuille selon l'invention avant compression,
- la figure 2 est une vue en coupe du matériau après compression,
- les figures 3 et 4 illustrent un exemple d'utilisation du matériau en feuille selon l'invention, et
- la figure 5 illustre un exemple comparatif d'utilisation d'un matériau en feuille de l'art antérieur, soumis aux mêmes conditions que dans l'exemple des figures 3 et 4.

Pour réaliser un matériau de revêtement en feuille selon l'exemple illustré, on superpose successivement un premier ruban de PTFE cru 1 d'une épaisseur de 0,15 mm, une feuille de bronze déployé 2 d'une épaisseur de 0,35 mm et un second ruban de PTFE 3 d'environ 0,45 mm d'épaisseur. Les deux rubans ont été obtenus par extrusion lubrifiée et présentent une densité de 1,6.

La structure ainsi réalisée est calandrée jusqu'à atteindre une épaisseur d'environ 0,5 mm.

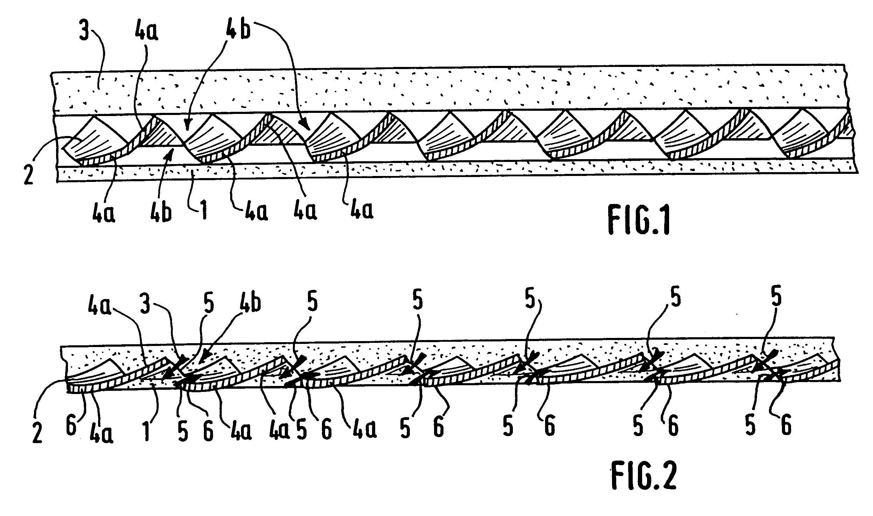

Comme on le voit sur la figure 2, lors de l'étape de calandrage, le PTFE pénètre entre les lanières 4a et donc dans les mailles 4b du métal déployé comme indiqué par les flèches 5. Simultanément, les mailles 4b se referment partiellement par rapprochement des lanières 4a en emprisonnant une partie du PTFE qui a flué entre les lanières 4a.

On obtient ainsi un accrochage mécanique des deux couches du PTFE sur le métal déployé.

Comme on le voit sur la figure 2, les lanières 4a de la nappe de métal déployé 2 situées du côté de la couche de PTFE la plus mince 1 viennent à affleurement de cette face du matériau en feuille après calandrage et comportent des parties découvertes 6.

Cet agencement permet de fixer le matériau en feuille ainsi obtenu sur une surface, non représentée, qu'il est destiné à recouvrir à l'aide d'une colle qui adhère aux parties découvertes 6 des lanières métalliques 4a.

Le matériau calandré est ensuite amené à traverser en continu un four pour réaliser le frittage du PTFE, en chauffant celui-ci à une température d'environ 390°C. Le temps de séjour dans le four est d'environ 20 minutes.

A sa sortie du four, le matériau est à nouveau calandré pour atteindre une épaisseur calibrée voulue puis refroidi à l'air libre.

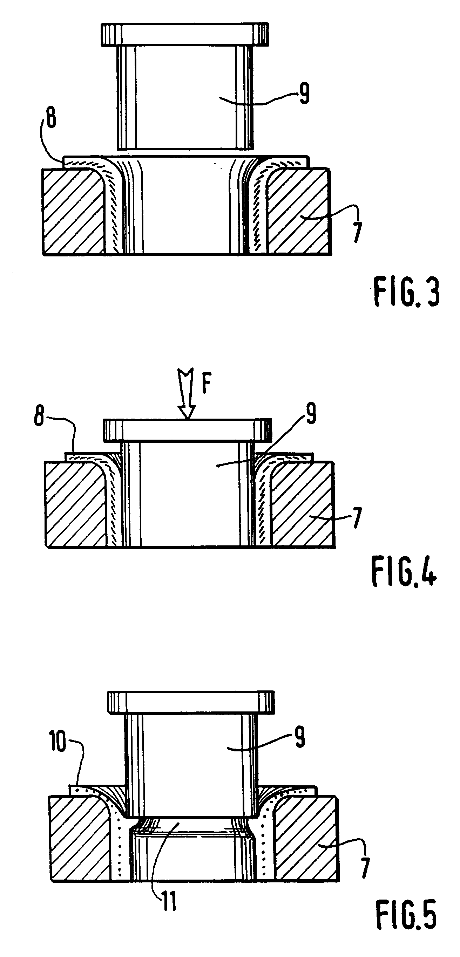

Les figures 3 et 4 représentent un assemblage de bagues destinées à maintenir une pièce mécanique entraînée en rotation.

Sur ces figures, une bague en acier 7 est revêtue intérieurement d'une bague 8 constituée par un matériau en feuille selon l'invention, réalisée à partir de PTFE.

L'assemblage ainsi constitué présente un alésage de 10 mm, avec un jeu maximal de 0,035 mm (tolérances H7/g6).

Une pièce rotative 9 en acier, d'un diamètre de 10,05 mm, est destinée à être engagée dans l'assemblage pour y être maintenue pendant son mouvement de rotation.

Comme on le voit sur la figure 4, l'application d'une force F équivalente au poids d'une masse de 40 kg permet de monter la pièce 9 dans l'assemblage de bagues.

Le faible coefficient de frottement du PTFE et sa bonne tenue au fluage, obtenue grâce à la présence de la nappe de métal déployé, permettent le maintien de la bague 8 qui présente une élasticité suffisante pour compenser l'augmentation de diamètre intérieur de l'assemblage.

Une fois engagée dans les bagues 7 et 8, la pièce 9 peut être mise en rotation avec un couple d'entraînement inférieur à 1 M.Kg, ce qui convient parfaitement à l'utilisation d'un tel assemblage pour réaliser des charnières de portières de véhicules automobiles.

Dans l'exemple comparatif illustré à la figure 5, la bague en acier 7 est revêtue intérieurement d'une bague 10 constituée par un matériau en feuille de l'art antérieur.

On voit sur cette figure 5 que l'introduction de la pièce mécanique 9 provoque le fluage du PTFE qui forme un bourrelet 11 à l'avant de la pièce 9.

La présence, selon l'invention, d'une nappe de métal déployé comme renfort métallique présente l'avantage d'améliorer l'élasticité du matériau tout en conservant de bonnes caractéristiques d'accrochage sur le renfort et de tenue au fluage du polytétrafluoroéthylène.

## Revendications

1. Procédé de fabrication d'un matériau en feuille présentant un faible coefficient de frottement, à partir d'un empilement d'une nappe de métal déployé et d'au moins un ruban de polytétrafluoroéthylène (PTFE), par compression et chauffage, caractérisé par le fait que l'on procède d'abord à un calandrage de l'empilement (1,2,3), puis à un chauffage de l'empilement calandré (1,2,3) pour réaliser le frittage du PTFE (1,3).

2. Procédé selon la revendication 1, caractérisé par le fait que lors du calandrage de l'empilement (1, 2, 3), ce dernier s'allonge de 10 à 25 %.

3. Procédé selon la revendication 1, caractérisé par le fait que lors du calandrage de l'empilement (1,2,3), on soumet ce dernier à une pression d'environ 500 kg par cm2.

4. Procédé selon la revendication 1, caractérisé par le fait que l'on dispose deux rubans de PTFE (1,3) de part et d'autre de la nappe de métal déployé (2).

5. Procédé selon la revendication 1, caractérisé par le fait que l'on utilise du PTFE fibré.

6. Procédé selon la revendication 1, caractérisé par le fait que l'on fabrique le matériau en feuille en continu, en entraînant une bande de métal déployé (2) et au moins un ruban de PTFE (1,3) empilés pour passer successivement au travers d'un ensemble de rouleaux de calandrage et d'un four.

7. Matériau en feuille présentant un faible coefficent de frottement, caractérisé par le fait qu'il est obtenu par mise en oeuvre du procédé selon l'une quelconque des revendications 1 à 6.

8. Charnière de portière de véhicule automobile, caractérisée par le fait qu'elle comporte un revêtement intérieur constitué par une feuille du matériau selon la revendication 7.

## Claims

1. Process for manufacturing a material in sheet form, having a low coefficient of friction, from a stack of a ply of expanded metal and of at least one polytetrafluoroethylene (PTFE) tape, by compression and heating, characterized in that the stack (1, 2, 3) is firstly calendered and then the calendered stack (1, 2, 3) is heated in order to sinter the PTFE (1, 3).

2. Process according to Claim 1, characterized in that during the calendering of the stack (1, 2, 3) the latter extends by 10 to 25%.

3. Process according to Claim 1, characterized in that during the calendering of the stack (1, 2, 3) the latter is subjected to a pressure of approximately 500 kg per cm².

4. Process according to Claim 1, characterized in that two PTFE tapes (1, 3) are arranged on either side of the ply of expanded metal (2).

5. Process according to Claim 1, characterized in that PTFE in fibre form is used.

6. Process according to Claim 1, characterized in that the material in sheet form is manufactured continuously by driving a band of expanded metal (2) and at least one PTFE tape (1, 3) stacked together in order to pass in succession through a set of calendering rolls and through an oven.

7. Material in sheet form having a low coefficient of friction, characterized in that it is obtained by implementing the process according to any one of Claims 1 to 6.

8. Door hinge for a motor vehicle, characterized in that it includes an internal coating consisting of a sheet of the material according to Claim 7.

## Patentansprüche

1. Verfahrenzur Herstellung eines blattförmigen Materials mit niedrigem Reibungskoeffizienten ausgehend von einem Stapel aus einer Schicht aus Streckmetall und mindestens einem Band aus Polytetrafluorethylen (PTFE) durch Verpressen und Erhitzen, **dadurch gekennzeichnet**, daß man zunächst den Stapel (1, 2, 3) kalandriert und dann den kalandrierten Stapel (1, 2, 3) erhitzt um ein Sintern des PTFE (1, 3) zu bewirken.

2. Verfahren nach Anspruch 1, **dadurch gekennzeichnet**, daß der Stapel (1, 2, 3) beim Kalandrieren um 10 bis 25 % gestreckt wird.

3. Verfahren nach Anspruch 1 **dadurch gekennzeichnet**, daß der Stapel (1, 2, 3) beim Kalandrieren einem Druck von etwa 500 kg/cm² unterworfen wird.

4. Verfahren nach Anspruch 1, **dadurch gekennzeichnet**, daß man zwei Bänder aus PTFE (1, 3) auf beiden Seiten der Schicht aus Streckmetall (2) anordnet.

5. Verfahren nach Anspruch 1, **dadurch gekennzeichnet**, daß man faserförmiges PTFE einsetzt.

6. Verfahren nach Anspruch 1, **dadurch gekennzeichnet**, daß man das Blattmaterial kontinuierlich herstellt, indem man ein Band aus Streckmetall (2) und mindestens ein Band aus PTFE (1, 3) in Form eines Stapels nacheinander durch eine Kalandrierwalzenanordnung und einen Ofen führt.

7. Blattmaterial mit niedrigem Reibungskoeffizienten, **dadurch gekennzeichnet**, daß es nach dem Verfahren gemaß einem der Ansprüche 1 bis 6 erhalten worden ist.

8. Türscharnier für Kraftfahrzeuge, **dadurch gekennzeichnet**, daß es eine Innenauskleidung aus einem Blatt des Materials nach Anspruch 7 umfaßt.
